# DEMANDE DE BREVET EUROPEEN

(11) **EP 4 443 412 A1**
(43) Date de publication de la demande: **09.10.2024**
(21) Numéro de dépôt: 24166818.5
(22) Date de dépôt: 27.03.2024
(51) Int. Cl.: G09C 5/00, H04L 9/32

(54) **PROCÉDÉ DE TATOUAGE NUMÉRIQUE D'UN RÉSEAU DE NEURONES, DISPOSITIF ET PROGRAMME D ORDINATEUR CORRESPONDANT**

(30) Priorité: 29.03.2023 FR 2303040
(71) Demandeur: THALES, 92190 Meudon (FR)
(72) Inventeur: BELFY, Henri, 31036 TOULOUSE CEDEX 1 (FR); FOUGERE, Tom, 31036 TOULOUSE CEDEX 1 (FR)
(74) Mandataire: Lavoix

(57) **Abrégé**

L'invention se rapporte à un procédé de tatouage numérique d'un réseau de neurones, procédé mis en oeuvre par un dispositif électronique, ledit réseau de neurones étant enregistré au sein d'une structure de données comprenant des blocs de paramètres. Un tel procédé comprend, pour un bloc de paramètres courant comprenant au moins N paramètres représentant des nombres réels :
- une étape d'obtention d'un message comprenant N bits ;
- au moins N itérations d'une étape de modification de paramètres au sein du bloc courant, comprenant :
- l'obtention d'un paramètre courant, parmi lesdits au moins N paramètres du bloc de paramètres courant ;
- la mise à jour de la valeur d'un bit d'index prédéterminé du paramètre courant en fonction d'un bit du message.

## Description

La présente invention se rapporte au domaine de la protection des réseaux de neurones. Plus particulièrement, l'invention se rapporte à la protection des données résultantes d'entrainement, appelées paramètres, qui sont utilisées pour l'inférence d'un réseau de neurones.

Les réseaux de neurones sont de plus en plus déployés et commercialisés dans une grande variété de scénarios du monde réel en raison des performances qu'ils atteignent, notamment dans des tâches de classification ou de prédiction. L'entraînement d'un réseau de neurones profond est un processus très coûteux qui nécessite (i) la disponibilité de quantités massives de données, souvent propriétaires, capturant différents scénarios au sein d'une application cible ; (ii) d'importantes ressources informatiques ; (iii) l'assistance d'experts en apprentissage profond pour ajuster soigneusement la topologie du réseau (par exemple, le type et le nombre de couches cachées), et définir correctement les hyper-paramètres d'entraînement, comme le taux d'apprentissage, la taille du lot, etc. Par conséquent, les réseaux de neurones performants nécessitent des investissements importants et doivent être protégés en conséquence. Ceci est particulièrement important quand le réseau de neurones est implémenté au sein d'équipements embarqués : ceux-ci peuvent être utilisés pour récupérer le réseau de neurones et l'utiliser dans d'autres contextes ou d'autres équipements.

Pour effectuer une protection des réseaux de neurones, on connait des techniques de tatouage numérique. Avec ces techniques, le réseau de neurones entrainé (qui se présente sous la forme d'une structure de données comprenant un ensemble de paramètres) est marqué (tatoué). Un processus de lecture est ensuite utilisé pour découvrir le ou les tatouages insérés au sein de la structure de données. On connait principalement deux types de techniques pour le tatouage des réseaux de neurones : les techniques dites en « boite noire » et les techniques dites en « boite blanche ».

Les techniques en boite blanche consistent essentiellement en l'insertion d'un ou de plusieurs tatouages numériques au sein même du réseau, c'est-à-dire dans les paramètres internes qui le constitue (par exemple postérieurement à l'apprentissage). Les paramètres internes qui sont tatoués peuvent correspondre directement aux poids du modèle, aux biais, ou à l'activation des neurones en correspondance avec des entrées spécifiques. Dans le cas du tatouage en boite blanche, le décodeur de tatouage extrait le ou les tatouages numériques à partir des paramètres du réseau de neurones. Il peut s'agir d'une extraction d'un message inséré au sein du réseau ou encore de la détection d'un tatouage.

Les techniques en boite noire consistent essentiellement en l'insertion d'un ou de plusieurs tatouages numériques, lesquels sont révélés lorsqu'une question spécifique est posée au réseau de neurones. Cette insertion peut être effectuée durant l'apprentissage du réseau. Ainsi, pour identifier la présence d'un tatouage numérique, en boite noire, seule la sortie finale du réseau de neurones est lisible. En d'autres termes, le tatouage est récupéré en interrogeant le modèle (avec une requête particulière, en fonction d'un ensemble d'entrées correctement choisies, par exemple des images ou du texte défini par avance) et en vérifiant la sortie du réseau de neurones. Pendant tout le processus de décodage ou de détection, l'architecture et les paramètres internes du réseau de neurones sont totalement aveugles au décodeur ou au détecteur. En d'autres termes, les seules éléments qui peuvent être contrôlées sont les entrées utilisées pour interroger le réseau et les sorties correspondant aux interrogations corrélatives aux requêtes.

Ces deux types de techniques (boite blanche, boite noire) peuvent être utilisées pour un même réseau de neurones.

Ces techniques souffrent cependant de problématiques d'effacement de tatouages, notamment lors de la modification du réseau de neurones (par exemple par réapprentissage, « prunning », quantisation, ...). En effet, les techniques en boite blanche notamment, qui modifient les paramètres internes du réseau de neurones, sont sensibles aux modifications qui sont apportées sur ces paramètres (changement de format du réseau de neurones, changement d'opérateur, suppression de couche, changement des couches d'entrées, changement des classes de sortie, etc.), par des attaquants souhaitant illégalement s'approprier le réseau. Cette absence de robustesse est particulièrement sensible pour les réseaux de neurones s'exécutant sur des dispositifs embarqués.

Un objectif de l'invention est de proposer une technique de tatouage numérique de réseau de neurones, en boite blanche, qui permette de résoudre les problématiques posées par les techniques antérieures, notamment la problématique de robustesse. Un autre objectif est de maintenir les qualités fonctionnelles du réseau de neurones (précision, faux-positive, r2...).

A cet effet, l'invention a pour objet un procédé de tatouage numérique d'un réseau de neurones, procédé mis en oeuvre par un dispositif électronique, ledit réseau de neurones étant enregistré au sein d'une structure de données comprenant des blocs de paramètres. Un tel procédé comprend, pour un bloc de paramètres courant comprenant au moins N paramètres représentant des nombres réels :
- une étape d'obtention d'un message comprenant N bits ;
- au moins N itérations d'une étape de modification de paramètres au sein du bloc courant, comprenant :
   - l'obtention d'un paramètre courant, parmi lesdits au moins N paramètres du bloc de paramètres courant ;
   - la mise à jour de la valeur d'un bit d'index prédéterminé du paramètre courant en fonction d'un bit du message.

Ainsi, la méthode proposée permet de stéganographier le message à tatouer. Cette stéganographie est simple et efficace puisque chaque paramètre subit une transformation minime en fonction d'un bit correspondant du message. Cette modification a donc peu d'impact sur la performance ultérieure du réseau de neurones. Par ailleurs, cette stéganographie est rapide à mettre en oeuvre et ne nécessite pas de calculs gourmands en énergie, contrairement à des méthodes mises en oeuvre lors de l'apprentissage des paramètres des réseaux de neurones comme dans l'art antérieur. Ainsi, le procédé revendiqué permet d'identifier l'origine d'un réseau de neurones, par exemple lorsque celui-ci est utilisé dans des dispositifs non autorisés ou encore lors d'opérations d'analyse de cyberattaques.

Selon une caractéristique particulière, l'étape de mise à jour de la valeur d'un bit d'index prédéterminé du paramètre courant en fonction d'un bit du message comprend une étape de calcul d'une opération de ou exclusif entre un bit d'un vecteur aléatoire de taille N et le bit correspondant du message.

Ainsi, le bit d'origine d'index prédéterminé est effacé au profit d'un bit issu de l'opération de ou exclusif entre le message et un vecteur aléatoire de même taille que le message se présente sous la forme d'un mot de code chiffré.

Selon une caractéristique particulière, l'étape d'obtention du message comprend :
- une étape d'obtention d'une chaine de caractères de référence ;
- une étape de calcul d'un code de contrôle cyclique de redondance en fonction de la chaine de caractères de référence, le code de contrôle cyclique étant concaténé à la chaine de caractères de référence pour former un mot de code ;
- une étape de chiffrement du mot de code délivrant un mot de code chiffré.

Selon une caractéristique particulière, l'étape d'obtention du message comprend en outre au moins une itération d'une étape de copie du mot de code chiffré au sein d'une chaine de caractères pour obtenir le message de longueur N bits.

Ainsi, on définit une redondance d'un message de base, en fonction de la taille du bloc. La taille du message en bits est un multiple de la taille d'un message unitaire. On obtient ainsi une redondance verticale du tatouage.

Selon une caractéristique particulière, l'étape d'obtention du message comprend :
- une étape de sélection aléatoire, au sein du bloc courant, d'un nombre prédéterminé K de bits de poids forts au sein d'un nombre prédéterminé de paramètres du bloc courant délivrant une image binaire caractéristique ;
- une première étape de combinaison de l'image binaire caractéristique avec une image de référence, délivrant une image fusionnée ;
- une deuxième étape de combinaison de l'image fusionnée avec une image binaire aléatoirement obtenue sur la base d'un tirage aléatoire de K bits, cette deuxième étape de combinaison délivrant le message.

Ainsi le tatouage prend en compte le contenu du bloc courant pour y insérer une image de référence à tatouer. Il est dès lors beaucoup plus simple, ultérieurement, de constater visuellement la présence du tatouage numérique inséré au sein du bloc courant. La force probante du tatouage est ainsi augmentée.

Selon une caractéristique particulière, la première et la deuxième étape de combinaison mettent chacune en oeuvre une opération de ou exclusif.

Selon un autre aspect, l'invention se rapporte également à un dispositif électronique de tatouage numérique d'un réseau de neurones, ledit réseau de neurones étant enregistré au sein d'une structure de données comprenant des blocs de paramètres. Un tel dispositif comprend pour un bloc de paramètres courant comprenant au moins N paramètres représentant des nombres réels :
- des moyens d'obtention d'un message comprenant N bits ;
- des moyens de mise en oeuvre d'au moins N itérations de modification de paramètres au sein du bloc courant, comprenant :
   - l'obtention d'un paramètre courant, parmi lesdits au moins N paramètres du bloc de paramètres courant ;
   - la mise à jour de la valeur d'un bit d'index prédéterminé du paramètre courant en fonction d'un bit du message.

Selon une implémentation préférée, les différentes étapes des procédés exposés sont mises en oeuvre par un ou plusieurs logiciels ou programmes d'ordinateur, comprenant des instructions logicielles destinées à être exécutées par un processeur de données d'un module relais selon la divulgation et étant conçu pour commander l'exécution des différentes étapes des procédés. En conséquence, la divulgation vise aussi un programme, susceptible d'être exécuté par un ordinateur ou par un processeur de données, ce programme comportant des instructions pour commander l'exécution des étapes des procédés tel que mentionné dans la présente, lorsqu'ils sont exécutés par un terminal et/ou par un circuit intégré. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable. La divulgation vise aussi un support d'informations lisible par un processeur de données, et comportant des instructions d'un programme tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur, une mémoire flash ou une mémoire d'un de stockage d'un autre type. D'autre part, le support d'informations peut être un support transmissible tel qu'un signal électrique ou optique, qui peut être acheminé via un câble électrique ou optique, par radio ou par d'autres moyens. Le programme selon la divulgation peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question. Selon un mode de réalisation, la divulgation est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.). De la même manière, un composant matériel correspond à tout élément d'un ensemble matériel (ou « hardware ») apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (« firmware »), etc. Chaque composante de l'ensemble précédemment décrit met bien entendu en oeuvre ses propres modules logiciels. Les différents exemples de réalisation et caractéristiques mentionnés sont combinables entre eux pour la mise en oeuvre de la divulgation.

D'autres caractéristiques et avantages de l'invention ressortiront de la description qui en est donnée ci-dessous, à titre indicatif et nullement limitatif, en référence aux figures annexées, parmi lesquelles :
- [Fig. 1] illustre un dispositif de tatouage numérique selon un exemple de réalisation ;
- [Fig. 2] illustre un procédé de tatouage numérique d'un réseau de neurones dans un exemple de réalisation ;
- [Fig. 3] illustre un premier exemple de mise en oeuvre du procédé de tatouage numérique d'un réseau de neurones ;
- [Fig. 4] illustre un deuxième exemple de mise en oeuvre du procédé de tatouage numérique d'un réseau de neurones.

### Rappels du principe

Comme explicité précédemment, un objet de l'invention est de disposer d'une technique de tatouage numérique en boite blanche qui offre une résistance accrue aux attaques que peut subir un réseau de neurones, particulièrement dans un contexte de mise en oeuvre embarquée. Un autre objet de la présente est ainsi de permettre d'identifier plus efficacement un réseau de neurones qui a été extrait d'un dispositif embarqué, puis modifié et réinséré dans un autre dispositif embarqué, par un attaquant qui souhaite détourner l'usage d'un réseau de neurones ne lui appartenant pas, modifier un réseau de neurones pour fausser les résultats de celui-ci (par exemple pour effectuer une cyberattaque) ou encore réaliser des économies en s'appropriant le travail de recherche et de développement effectué par un concurrent.

Le principe général de l'invention consiste en l'insertion, au sein d'au moins un bloc de paramètres du réseau de neurones (préalablement entrainé), d'un tatouage (prenant la forme d'une message), dans des bits sélectionnés des paramètres (valeurs numériques) enregistrés dans le bloc de paramètres. L'invention se rapporte ainsi à un procédé de tatouage numérique d'un réseau de neurones (préalablement entrainé) comprenant un ensemble de blocs de paramètres, les blocs de paramètres comprenant des paramètres du réseau de neurones. Ces paramètres sont par exemple des paramètres qui ont fait l'objet de l'apprentissage, comme les poids des couches, les biais, les valeurs de tenseurs, les valeurs de normalisation, les valeurs de convolution, etc. Ainsi, au moins certains des blocs de paramètres comprennent chacun un ensemble de paramètres, dont le nombre est variable en fonction du bloc en question. Dans un exemple de réalisation, les blocs de paramètres comprennent des valeurs réelles flottantes (float) d'un nombre de bits prédéterminé (par exemple 8, 16, 32 ou 64 bits). En d'autres termes, chacune de ces valeurs réelles flottantes est par exemple stockée sur un, deux, quatre ou huit octets (pour un bloc donné, le codage des paramètres est identique). Le procédé de tatouage numérique de l'invention est exécuté sur ces blocs de paramètres pour insérer, au sein de ceux-ci, un message secret (le message tatoué) qui peut se présenter sous la forme d'une répétition d'un message de base. Le procédé est par exemple mis en oeuvre sur un réseau de neurones enregistré au format onnx, lequel présente l'avantage de disposer de nombreuses API d'accès et de modifications, quels que soient les langages de programmation utilisés.

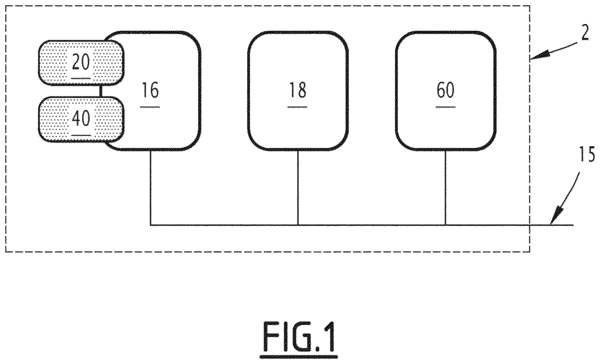

La figure 1 illustre schématiquement un dispositif électronique de tatouage numérique. Le dispositif électronique de tatouage numérique 2 comprend un module d'obtention (20) d'un message à tatouer (Msg) ; un module de modification (40) de paramètres au sein des blocs de paramètres constituant le réseau de neurones comme représenté sur la figure 1.

Dans l'exemple de la figure 1, le dispositif de tatouage numérique 2 comprend une unité de mémoire électronique 16, au moins un processeur de calcul 18 et une interface 60 de communication avec des dispositifs distants, par un protocole de communication choisi, par exemple un protocole filaire et/ou un protocole de communication radio. Les éléments du dispositif 2 sont adaptés à communiquer via un bus de communication 15.

Dans l'exemple de la figure 1, le module d'obtention (20) d'un message à tatouer (Msg), le module de modification (40) de paramètres au sein des blocs de paramètres constituant le réseau de neurones sont réalisés chacun sous forme d'un logiciel, ou d'une brique logicielle, exécutable par le processeur. La mémoire du dispositif électronique de tatouage numérique 2 est alors apte à stocker un logiciel d'obtention d'un message à tatouer (Msg) et un logiciel de modification de paramètres au sein des blocs de paramètres constituant le réseau de neurones. Le processeur est alors apte à exécuter chacun des logiciels parmi le logiciel d'obtention d'un message à tatouer (Msg) et le logiciel de modification de paramètres au sein des blocs de paramètres constituant le réseau de neurones.

En variante non représentée, le module d'obtention d'un message à tatouer (Msg), et le module de modification de paramètres au sein des blocs de paramètres constituant le réseau de neurones, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit).*

Lorsque le dispositif électronique de tatouage numérique 2 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

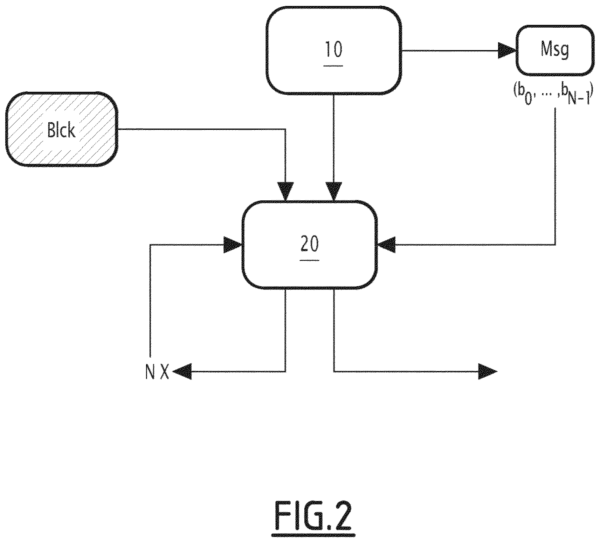

En relation avec la figure 2, le procédé de tatouage numérique d'un réseau de neurones de l'invention est mis en oeuvre sur un réseau de neurones qui est enregistré au sein d'une structure de données comprenant des blocs de paramètres (Blck), le procédé comprenant, pour un bloc de paramètres courant (qui comprend par exemple au moins N paramètres (p₀, ..., p_{N-1}) représentant des nombres réels, et il comprend :
- Une étape d'obtention (10) du message Msg comprenant N bits (b₀, ..., b_{N-1}) ;
- Au moins N itérations d'une étape de modification (20) de paramètres au sein du bloc de paramètres courant, comprenant :
   - L'obtention d'un paramètre courant (px), parmi lesdits *au moins N* paramètres *(p₀,* ..., *p_{N-1}) du bloc de paramètres courant ;*
   - La mise à jour de la valeur d'un bit (b_{iPx}) d'index prédéterminé du paramètre courant (px) en fonction d'un bit (b₀, ..., b_{N-1}) du message Msg.

Lorsque le nombre de paramètres enregistrés dans le bloc est supérieur à la longueur en bits du message à insérer, l'étape de mise à jour est itérée en repartant du premier bit du message à insérer. Alternativement, le message Msg à tatouer comprend déjà plusieurs (un nombre entier supérieur à deux) occurrences d'un message de référence (message de base). Le tatouage est effectué de sorte à ce qu'un nombre entier de copies du message de base est tatoué (il n'y a pas de tatouage partiel du message de base). On obtient ainsi une redondance dans l'insertion du message (dans le tatouage) au sein du réseau de neurones, comme cela est explicité en détail par la suite.

Le message à tatouer au sein des bits des paramètres (valeurs réelles) peut prendre plusieurs formes. Dans un premier exemple, le message peut se présenter sous la forme d'une chaine de caractères chiffrée (ou de la répétition d'une chaine de caractères chiffrée). Dans un deuxième exemple, le message à tatouer peut se présenter sous la forme d'une image. Dans un troisième exemple, le message à tatouer peut se présenter sous la forme d'une signature.

Dans le cas du premier exemple, la chaine de caractères peut être construite de la manière suivante : une chaine de caractères de référence est déterminée (par exemple une chaine définissant un copyright, de type « TheCompany1^{©} ». Cette chaine peut avoir une longueur déterminée (par exemple six, douze, dix-huit, vingt-quatre caractères). A partir de cette chaine de caractère de référence, un code de détection d'erreur est calculé (CRC, de l'anglais pour « *cyclic redundancy check »).* Ce code de détection d'erreurs est concaténé avec la chaine de caractère de référence pour former un mot de code (« codeword » en anglais). Ce mot de code dispose également d'une taille prédéterminée. Le mot de code est ensuite chiffré (par exemple avec un algorithme de type chiffrement de flux dans lequel la taille du message chiffré est identique à la taille du message d'origine, ce qui facilite le traitement réalisé pour l'insertion ou la récupération des messages). Le mot de code chiffré est ensuite encodé, par exemple par une transformation pseudo-aléatoire réversible et le mot de code chiffré et encodé constitue le message à insérer au sein des blocs de paramètres du réseau de neurones. Le mot de code chiffré et encodé est également de taille prédéterminée (par exemple soixante-quatre, cent vingt-huit ou deux cent cinquante-six bits). La taille du mot de code chiffré est choisie, initialement, en fonction des circonstances de l'espèce et notamment en fonction de la taille des blocs (par exemple en fonction du nombre de paramètres contenus dans les blocs de paramètres), de sorte notamment à permettre l'insertion complète d'au moins une occurrence du message dans les blocs de valeurs réelles, et obtenir ainsi au moins une inscription complète du message dans un bloc.

Dans le cas du deuxième exemple, l'image à insérer en tant que message peut être sélectionnée de sorte à reproduire visuellement un marquage d'appartenance à une entité (par exemple l'image peut être un logo d'une entreprise). L'image est sélectionnée pour que sa taille en bits soit compatible avec au moins certains des blocs de paramètres (i.e. qu'elle soit insérable au sein d'un bloc de paramètres). Comme dans le cas de la chaine de caractères, il est également possible de calculer un code correcteur d'erreur et/ou de chiffrer (le mot de code résultant ou directement l'image) et/ou de transformer l'image, le mot de code ou le mot de code chiffré encodé comme dans le premier exemple.

Dans le cas du troisième exemple, la signature peut être insérée sur la base du contenu du réseau lui-même. Cette troisième possibilité est détaillée infra.

### Premier exemple de réalisation

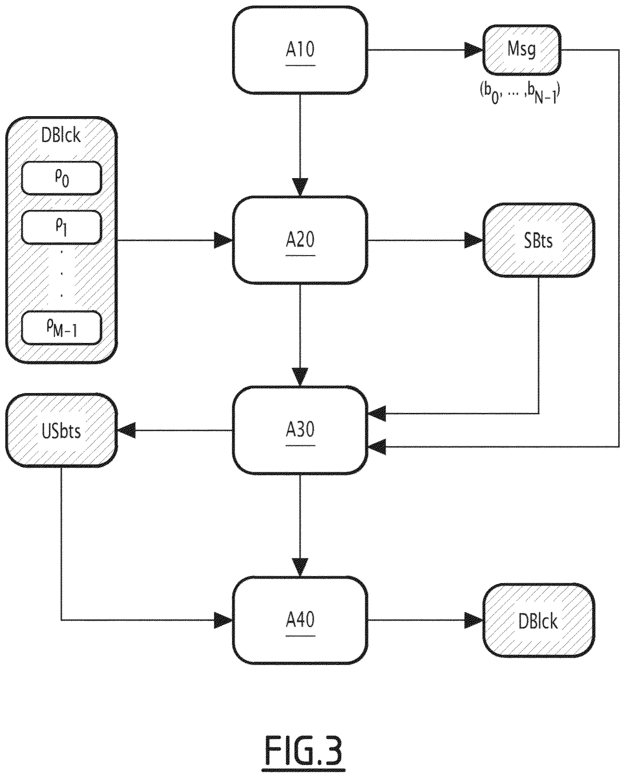

On présente, en relation avec la figure 3, dans ce premier exemple de réalisation, la manière dont le message est tatoué au sein d'un bloc de paramètres courant du réseau de neurones, comprenant M paramètres différents, enregistrés sous la forme de nombre réels.

Cette méthode comprend :
- Une étape d'obtention A10 d'un message Msg se présentant sous la forme d'une suite de bits de longueur prédéterminé N ;
- Une étape de sélection A20, au sein du bloc de paramètres courant Dblck, d'un ensemble de N bits (SBts), chaque bit de l'ensemble SBts appartenant à un paramètre différent du bloc de paramètres courant DBlck ;
- Une étape de modification A30 de chaque bit de l'ensemble SBts à l'aide d'un bit correspondant du message Msg, délivrant un ensemble de bits modifiés (USbts) ;
- Une étape de réécriture A40 de chaque bit modifié de l'ensemble USBts à son emplacement d'origine au sein du bloc de paramètres courant DBlck.

En d'autres termes, et de manière plus concise, la méthode proposée consiste à écrire dans les bits sélectionnés (par exemple dans une colonne ou plusieurs colonnes de bits de poids faible), de manière verticale, le message de longueur prédéterminée.

Ainsi, le tatouage numérique inséré dans le bloc de paramètres est invisible. En effet, dans la mesure où la modification des bits d'origine est effectuée en réalisant une opération spécifique sur ces bits d'origine à l'aides des bits correspondants du message à tatouer, un attaquant ne peut pas déterminer la présence du tatouage, sauf à connaitre le message qui a été inséré et à effectuer l'opération de décodage permettant d'identifier les bits d'origine (avant insertion du tatouage).

La procédure décrite peut être mise en oeuvre itérativement sur tout ou partie des blocs de paramètres du réseau de neurones. De manière préférentielle, cette procédure est mise en oeuvre dans une majorité des blocs de paramètres du réseau de neurones. Ainsi, Le tatouage numérique est redondant. De manière encore plus préférentielle, cette procédure est mise en oeuvre sur la totalité des blocs de paramètres dans lesquels cette insertion de tatouage est possible ou souhaitable. Ainsi, le tatouage résiste encore mieux aux attaques.

Selon la présente l'étape de modification des bits de l'ensemble de bits comprend une opération de ou exclusif (xor) entre un ensemble de N bits aléatoirement obtenus et chaque bit correspondant du message Msg. Cet ensemble de N bits est aléatoirement obtenu à partir d'une graine (« seed ») de référence qui est conservée pour effectuer le décodage du tatouage. Cette opération de « ou exclusif » réalisée sur le message Msg permet de bruiter celui-ci, de manière aléatoire, et elle permet qu'un attaquant ne puisse pas deviner la présence du tatouage numérique au sein des paramètres des blocs. Cette opération de bruitage peut être effectuée en utilisant d'autres moyens ou d'autres opérations (par exemple, on pourrait utiliser directement les bits du réseau à la place de générer un nombre aléatoire de bits, ou on pourrait utiliser une autre opération que le ou exclusif).

Comme indiqué précédemment, pour un bloc courant, le message peut être tatoué à plusieurs reprises, par exemple dans des colonnes de bits différentes.

La méthode de décodage mise en oeuvre est la suivante : Pour un bloc de paramètres courant d'un réseau de neurones dont on suspecte qu'il appartient à un titulaire de droit, on effectue une extraction des N bits qui ont supposément été tatoués lors d'une procédure identique ou similaire à celle exposé précédemment (les bits qui sont situés à un index donné des paramètres du bloc de paramètre courant). Par exemple, à l'aide de la graine de référence (« seed ») utilisée lors du codage, l'ensemble de N bits aléatoirement obtenus lors du codage est à nouveau obtenu. En utilisant cet ensemble de N bits et les N bits du bloc courant, on effectue une opération de ou exclusif qui délivre un ensemble de N bits « débruités » (si c'est cette opération qui a été réalisée au codage). L'ensemble de N bits débruités comprend au moins une répétition d'un message de base qui a été encodé (répétitions qui sont toutes potentiellement altérées par des modifications réalisées postérieurement au vol du réseau de neurones au titulaire des droits). Pour un bloc, le nombre de répétitions varie en fonction de la taille du bloc et de la taille du message de base. Une opération de correction d'erreur peut être effectuée sur ces bits débruités (un décodage logique majoritaire est par exemple effectué - méthode de décodage des codes de répétition, basée sur l'hypothèse que le plus grand nombre d'occurrences d'un symbole est le symbole transmis). Puis le contrôle du mot de code est effectué afin de déterminer s'il existe une ou plusieurs répétitions de ce mot de code chiffré : on effectue l'opération inverse à savoir un déchiffrement du mot de code, et le contrôle du CRC par rapport au message secret initial.

La présence d'un seul mot de code correct, qui comprend donc le message secret et le code CRC qui correspond à ce message, est suffisante pour déterminer que le bloc courant fait partie d'un réseau de neurone appartenant au titulaire de droit.

### Deuxième exemple de réalisation

Dans un deuxième exemple de réalisation, la méthodologie de marquage est sensiblement identique à celle mise en oeuvre dans le premier exemple de réalisation. Elle consiste à tatouer, dans un bloc courant, des bits, par exemple des bits de poids faibles, des paramètres comprenant des valeurs réelles (par exemple codées sur seize, trente-deux ou soixante-quatre bits), contenues dans ce bloc. Le principe de tatouer des colonnes de bits est également conservé. Cependant, la nature du tatouage est rendue différente par l'utilisation d'une signature en lieu et place du message codé tel que décrit précédemment. Selon la présente, cette signature est obtenue à partir des bits de poids fort du bloc de paramètres courant du réseau de neurones. Le principe mis en oeuvre est de tatouer une signature visuelle afin qu'il soit aisé de constater la présence du tatouage numérique. Ce tatouage est visible avec ou sans correction d'erreur éventuelle.

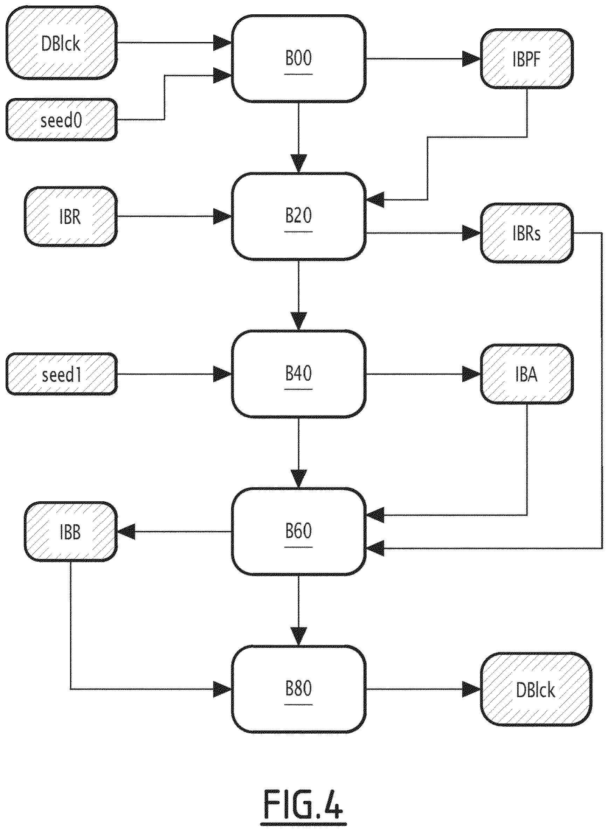

On présente, en relation avec la figure 4, dans ce deuxième exemple de réalisation, la manière dont le message à tatouer est formé. La méthode mise en oeuvre est la suivante :
- Dans le bloc courant (DBlck), une obtention (B00) d'un nombre prédéterminé de bits de poids fort parmi une sélection aléatoire de paramètres est effectuée ; cette sélection est réalisée par exemple à l'aide d'une graine de sélection (seed0) qui est conservée ; les bits de poids forts sélectionnés sont arrangés de sorte à former une image binaire IBPF de taille prédéterminée (en longueur et en largeur) ; En fonction de la taille souhaitée de l'image, pour chaque paramètre (aléatoirement sélectionné) du bloc courant, il est possible de sélectionner un ou plusieurs bits de poids fort (par exemple quatre bits de poids fort, par exemple aux index 26 à 23 peuvent être sélectionnés pour chaque paramètre). Il s'agit d'un exemple purement illustratif.
- L'image binaire IBPF est combinée (B20) à une image binaire de référence IBR, qui fait office de message secret ; les tailles des images binaires IBPF et IBR sont identiques ; Cette combinaison délivre une image binaire de référence signée (IBRs) : elle est signée par les bits de poids fort sélectionnée dans le bloc ;
- Une image binaire aléatoire (IBA) est générée (B40), cette génération est réalisée par exemple à l'aide d'une graine de génération (seed1) qui est conservée pour effectuer un décodage ;
- L'image binaire de référence signée IBRs est combinée (B60) avec l'image binaire aléatoire (IBA) pour former une image binaire bruitée (IBB) ;
L'image binaire bruitée (IBB) est insérée (B80) dans des bits de poids faible de paramètres du bloc courant, en lieu et place des bits existants. En fonction de la taille de l'image, pour chaque paramètre du bloc courant, il est possible d'écraser (de remplacer) un ou plusieurs bits de poids faible (par exemple quatre bits de poids faible, par exemple aux index 10 à 7 peuvent être remplacés pour chaque paramètre de la sélection aléatoire de paramètres de l'étape B00).

Ainsi, grâce à cette mise en oeuvre, on a tatoué une signature au sein d'une partie du bloc courant, sous la forme d'une image binaire. Lors de l'opération de décodage, il est ainsi possible de retrouver visuellement la présence de cette image binaire tatouée. Pour les besoins de la présente on rappelle qu'une image binaire (qu'elle soit de référence, caractéristique, de signature, etc.) est une image matricielle bichrome (par exemple noire et blanche). Elle est par exemple codée sous une forme binaire (en base 2), soit codée sous une forme plus complexe avec uniquement deux couleurs possibles.

La méthode de décodage mise en oeuvre est la suivante : Pour un bloc de paramètres courant d'un réseau de neurones, dont on suspecte qu'il appartient à un titulaire de droit, on effectue une extraction des bits de poids faible qui ont supposément été tatoués lors d'une procédure identique ou similaire à celle exposé précédemment, délivrant une image binaire des bits de poids faible (IBbpf). On effectue également une extraction des bits de poids fort des mêmes paramètres, délivrant une image binaire des bits de poids faible (IBbpFo). Ces extractions sont rendues possibles en utilisant la graine de sélection (seed0) et les index des bits qui ont été déterminés lors du codage (et conservés pour le décodage ultérieur). Ces deux images binaires sont combinées entre elles pour fournir une image binaire intermédiaire (IBI). L'image binaire aléatoire (IBA) (utilisée lors du codage) est générée, cette génération est réalisée par exemple à l'aide de la graine de génération (seed1) qui a été conservée pour effectuer un décodage. L'image binaire intermédiaire (IBI) est combinée avec l'image binaire aléatoire (IBA) pour former une image binaire à interpréter (IBIn).

L'avantage de cette technique est que l'image binaire à interpréter (IBIn) est une version plus ou moins dégradée de l'image binaire de référence IBR utilisée lors du codage. En effet, les opérations de combinaison effectuées sur les images étant identiques, il est aisé d'afficher l'image résultante de ces opérations de combinaison de bits. Les différences qui apparaissent entre l'image binaire de référence IBR (non dégradée) et binaire à interpréter (IBIn) résultent des modifications qui ont été réalisées sur le bloc de paramètre par la personne malveillante : les réapprentissages, élagages, etc. qui ont conduit à des modifications plus ou moins importantes des bits de poids faibles des paramètres du bloc courant ne modifient pas totalement l'image et celle-ci reste interprétable et visualisable.

Une correction d'erreur de type majoritaire peut également être effectuée sur les blocs concernés, afin de récupérer une version plus lisible de l'image (lorsque plusieurs blocs sont tatoués avec la même image par exemple). Il est ainsi possible de constater la présence de l'image tatouée dans plusieurs blocs, même en cas de modifications des paramètres du réseau de neurones.

### Sélection d'une configuration d'insertion optimale

Dans un exemple de réalisation complémentaire, le procédé de tatouage numérique décrit précédemment peut être mis en oeuvre de manière optimisée en sélectionnant, dans les blocs de paramètres, le ou les index de bits dans lesquels le message est inséré en fonction d'un seuil de performance et/ou robustesse du réseau de neurones. Plus particulièrement, dans cet exemple de réalisation, le réseau de neurones original (i.e. avant insertion du tatouage numérique), constitue la référence en terme de performance et/ou robustesse. Le procédé de l'invention est mis en oeuvre itérativement sur le réseau de neurones de référence pour délivrer au moins un réseau modifié, c'est-à-dire un réseau tatoué. La performance et/ou robustesse du réseau modifié est évaluée au regard de la performance et/ou robustesse délivrée par le réseau de référence. Lorsque la performance et/ou robustesse du réseau modifié se situe en dessous d'un seuil de référence, le tatouage effectué n'est pas retenu.

### Sélection différentiée des blocs de paramètres

Selon l'invention, les blocs de paramètres dans lesquels le message est inséré sont sélectionnés en fonction de critères de sélection particulier.

Ainsi, lorsqu'un bloc de paramètres est de taille réduite (lorsque le nombre de valeurs de paramètres du bloc de paramètres est inférieur à un seuil prédéterminé), ce bloc de paramètres n'est pas tatoué. Cette exclusion permet d'éviter que des blocs de paramètres subissent des tatouages partiels, non lisibles par la suite.

Alternativement, ou en complément, lorsqu'un bloc de paramètres est de taille réduite, le message à insérer dans ce bloc de paramètres peut être différent. Dans ce cas, par exemple, un message spécifique (réduit) pour les blocs de paramètres de taille réduite peut être construit afin de permettre l'insertion d'un tatouage. Cette méthode peut être mise en oeuvre par exemple lorsque le nombre de valeurs numériques d'un bloc de paramètres est inférieur à la longueur (en bits) du message « régulier ». Par exemple, si le message régulier à une longueur de cent vingt-huit bits et que le bloc de paramètres comprend cent valeurs, un message réduit de longueur égale à soixante-quatre bits peut être utilisé pour effectuer le tatouage de ce bloc.

Selon un autre aspect, lorsqu'un bloc de paramètres comprend une majorité de valeurs identiques (par exemple uniquement ou majoritairement des valeurs zéros ou des valeurs uns), le bloc de paramètres peut être exclu du tatouage numérique. Cette exclusion permet d'éviter qu'un attaquant ne prenne connaissance du tatouage numérique inséré ou d'une partie de ce tatouage numérique. En effet, comme explicité précédemment un avantage de la technique de l'invention est de permettre de conserver le tatouage « secret », dans la mesure où celui-ci n'influe pas ou peu sur la performance et/ou la robustesse du réseau. Les exclusions des blocs comprenant des valeurs majoritairement identiques permettent d'éviter que l'attaquant ne prenne connaissance de ce tatouage à partir d'un postulat relatif à ces valeurs (connaissance à priori de ces valeurs par l'attaquant).

### Marquage additionnel de champs documentaires

Selon une caractéristique additionnelle, le procédé de tatouage comprend en outre une étape de marquage de champs documentaire. En fonction du format utilisé pour sauvegarder le réseau de neurones issu de l'entrainement, des champs documentaires sont en effet présents. Par exemple, le format onnx, contient des champs documentaires qui peuvent faire l'objet d'un marquage. Les champs suivant peuvent par exemple être modifiés avec une chaine de caractère secrète :
model.producer_name
model.producer_version
model.doc_string
model.graph.doc_string

Cette chaine de caractère secrète peut être identique au message inséré dans les blocs de paramètres. De manière préférentielle, cependant, cette chaine sera différente pour permettre de conserver secret le contenu du message ou des messages insérés dans les blocs de paramètres. L'avantage de ce marquage complémentaire est qu'il ne nécessite pas de modifier les valeurs inscrites dans le réseau de neurones. Il est donc sans impact sur les performances du réseau de neurones. Comme pour le message inséré dans les valeurs des blocs, ce marquage peut comprendre un nombre prédéterminé de caractères, à partir duquel on calcule un code correcteur d'erreurs, le mot de code résultant étant chiffré et encodé en base64 par exemple.

### Caractéristiques complémentaires relatives au réseau de neurones

Le réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un réseau de neurones à convolution est aussi parfois dénommé réseau de neurones convolutif ou par le sigle CNN qui renvoie à la dénomination anglaise de « Convolutional Neural Networks ».

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « kernel » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « fully connected », et parfois désigné sous la dénomination « couche dense ».

Ces types de réseau de neurones sont encodés dans des formats génériques comme par exemple onnx. La présente divulgation s'applique à tout type de topologie de réseau de neurones courant supporté par ce format générique, par exemple « fully connected », CNN, mais également RNN, « Attention layer », ... qui est représentable par un ou plusieurs blocs de paramètres comprenant des valeurs tel qu'exposé précédemment.

## Revendications

1. Procédé de tatouage numérique d'un réseau de neurones, procédé mis en oeuvre par un dispositif électronique, ledit réseau de neurones étant enregistré au sein d'une structure de données comprenant des blocs de paramètres, le procédé comprenant, pour un bloc de paramètres courant comprenant au moins N paramètres (p₀, ..., p_{N-1}) représentant des nombres réels, les paramètres étant choisis parmi le groupe consistant en : des poids de couches, des biais, des valeurs de tenseurs, des valeurs de normalisation, et des valeurs de convolution :
- une étape d'obtention (10) d'un message (Msg) comprenant N bits (b₀, ..., b_{N-1}) ;
- au moins N itérations d'une étape de modification (20) de paramètres au sein du bloc courant, comprenant :
- l'obtention d'un paramètre courant (px), parmi lesdits au moins N paramètres (p₀, ..., p_{N-1}) du bloc de paramètres courant ;
- la mise à jour de la valeur d'un bit (b_{iPx}) d'index prédéterminé du paramètre courant (px) en fonction d'un bit (b₀, ..., b_{N-1}) du message (Msg).

2. Procédé de tatouage numérique selon la revendication 1, **caractérisé en ce que** l'étape de mise à jour de la valeur d'un bit (b_{iPx}) d'index prédéterminé du paramètre courant (px) en fonction d'un bit (b₀, ..., b_{N-1}) du message (Msg) comprend une étape de calcul d'une opération de ou exclusif entre un bit (b_{iR}) d'un vecteur aléatoire (RbV) de taille N et le bit (bim) correspondant du message (Msg).

3. Procédé de tatouage numérique selon la revendication 1, **caractérisé en ce que** le message (Msg) se présente sous la forme d'un mot de code chiffré.

4. Procédé de tatouage numérique selon la revendication 1, **caractérisé en ce que** l'étape d'obtention (10) du message (Msg) comprend :
- une étape d'obtention d'une chaine de caractères de référence ;
- une étape de calcul d'un code de contrôle cyclique de redondance en fonction de la chaine de caractères de référence, le code de contrôle cyclique étant concaténé à la chaine de caractères de référence pour former un mot de code ;
- une étape de chiffrement du mot de code délivrant un mot de code chiffré.

5. Procédé de tatouage numérique selon la revendication 1, **caractérisé en ce que** l'étape d'obtention (10) du message (Msg) comprend en outre au moins une itération d'une étape de copie du mot de code chiffré au sein d'une chaine de caractères pour obtenir le message (Msg) de longueur N bits.

6. Procédé de tatouage numérique selon la revendication 1, **caractérisé en ce que** l'étape d'obtention (10) du message (Msg) comprend :
- une étape de sélection aléatoire, au sein du bloc courant, d'un nombre prédéterminé K de bits de poids forts au sein d'un nombre prédéterminé de paramètres du bloc courant délivrant une image binaire caractéristique ;
- une première étape de combinaison de l'image binaire caractéristique avec une image de référence (IR), délivrant une image fusionnée ;
- une deuxième étape de combinaison de l'image fusionnée avec une image binaire aléatoirement obtenue sur la base d'un tirage aléatoire de K bits, cette deuxième étape de combinaison délivrant le message (Msg).

7. Procédé de tatouage numérique selon la revendication 6, **caractérisé en ce que** la première et la deuxième étape de combinaison mettent chacune en oeuvre une opération de ou exclusif.

8. Dispositif électronique de tatouage numérique d'un réseau de neurones, ledit réseau de neurones étant enregistré au sein d'une structure de données comprenant des blocs de paramètres, le dispositif comprenant, pour un bloc de paramètres courant comprenant au moins N paramètres (p₀, ..., p_{N-1}) représentant des nombres réels, les paramètres étant choisis parmi le groupe consistant en : des poids de couches, des biais, des valeurs de tenseurs, des valeurs de normalisation, et des valeurs de convolution :
- des moyens d'obtention (10) d'un message (Msg) comprenant N bits (b₀, ..., b_{N-1}) ;
- des moyens de mise en oeuvre d'au moins N itérations de modification (20) de paramètres au sein du bloc courant, comprenant :
- l'obtention d'un paramètre courant (px), parmi lesdits au moins N paramètres (p₀, ..., p_{N-1}) du bloc de paramètres courant ;
- la mise à jour de la valeur d'un bit (b_{iPx}) d'index prédéterminé du paramètre courant (px) en fonction d'un bit (b₀, ..., b_{N-1}) du message (Msg).

9. Programme d'ordinateur comportant des instructions logicielles qui, lorsqu'elles sont exécutées par un dispositif électronique programmable, mettent en oeuvre un procédé de tatouage numérique conforme aux revendications 1 à 7.

10. Réseau de neurones, enregistré au sein d'une structure de données et sauvegardé sur un support lisible par ordinateur comprenant des blocs de paramètres, le réseau de neurones étant **caractérisé en ce qu'**il est tatoué par un procédé de tatouage numérique conforme aux revendications 1 à 7.
